# EUROPEAN PATENT APPLICATION

(11) **EP 4 721 935 A1**
(43) Date of publication of application: **08.04.2026**
(21) Application number: 24819301.3
(22) Date of filing: 03.06.2024
(51) Int. Cl.: B25J 15/08, B25J 15/04, B25J 19/02

(54) **TACTILE SENSOR, TACTILE SENSOR KIT, TACTILE SENSOR SYSTEM, AND GRIP PORTION UNIT**

(30) Priority: 05.06.2023 JP 2023092241
(71) Applicant: Fingervision Inc., Tokyo 135-0016 (JP)
(72) Inventor: YAMAGUCHI, Akihiko, Tokyo 135-0016 (JP)
(74) Representative: Plougmann Vingtoft a/s
(86) International application number: PCT/JP2024/020261
(87) International publication number: WO 2024/253071

(57) **Abstract**

A tactile sensor S comprises a grip portion unit 10 including a gripping portion 13 that is capable of coming into contact with a target object T and that allows the target object T to be observed from a surface thereof on the opposite side to a surface that comes into contact with the target object T, and a reflective portion 15 capable of reflecting an image of the target object T observed from the surface on said opposite side, and a base unit 30 having an imaging portion C capable of imaging at least one of at least a portion of the surface on the opposite side and at least a portion of the reflecting portion, wherein the grip portion unit 10 is configured to be removable from the base unit 30.

## Description

### TECHNICAL FIELD

The present disclosure relates to a tactile sensor, a tactile sensor kit, a tactile sensor system, and a gripper unit.

### BACKGROUND ART

An inventor of the present disclosure has proposed a tactile sensor including a transmissive portion that includes a first surface capable of contacting an object to be gripped and a second surface that is an opposite surface of the first surface, an imaging unit that is capable of capturing, from the second surface, an image of the object presents on the first surface of the transmissive portion, and a reflective portion that is disposed on the second surface of the transmissive portion and configured to reflect light from at least a partial region of the transmissive portion to guide the reflected light into an imaging angle of the imaging unit (see Patent Document 1).

### PRIOR ART

### PATENT DOCUMENT

Patent Document 1: International Publication No. WO2021/001992

### SUMMARY OF INVENTION

### PROBLEMS TO BE SOLVED BY THE INVENTION

The tactile sensor has an advantage in that it can precisely control the gripping state by performing image analysis on the transmissive portion or the reflective portion when the object to be gripped is gripped, and is thus capable of gripping the object such as a rose without damaging its petals. As such, the tactile sensor described above has an advantage of appropriately gripping various objects. The ability to grip various objects implies that the geometric and physical properties of the objects to be gripped differ from one another, and thus, a challenge has been to develop a tactile sensor that can accommodate such varying geometric and physical properties of the objects to be gripped.

The present disclosure focuses on this point, and an object thereof is to provide a tactile sensor, a tactile sensor kit, a tactile sensor system, and a gripper unit that can grip various objects and reduce manufacturing cost.

### MEANS FOR SOLVING THE PROBLEMS

An aspect of the present disclosure is a tactile sensor that includes a gripper unit that includes i) a gripping portion capable of contacting an object to be gripped and capable of observing the object to be gripped from a surface opposite to a contact surface, and ii) a reflective portion capable of reflecting an image of the object to be gripped observed from the opposite surface, and a base unit that includes an imaging unit capable of imaging at least one of i) at least a portion of the opposite surface or ii) at least a portion of the reflective portion, wherein the gripper unit is configured to be detachable from the base unit.

The base unit may be a cylindrical body in which the imaging unit is provided, and the gripper unit may include a receiving surface that contacts a distal end surface of the cylindrical body when the gripper unit is attached to the base unit.

The gripper unit may be configured to be secured to the base unit by rotating in a circumferential direction of the gripper unit.

The tactile sensor according may further include a ball plunger that positions the gripper unit in the circumferential direction relative to the base unit when the gripper unit rotates to a predetermined position relative to the base unit.

The ball plunger may be provided at a distal end portion of the cylindrical body in a direction extending along an axial direction of the cylindrical body of the gripper unit.

The tactile sensor may further include a locking means that detachably secures the gripper unit to the base unit, wherein the locking means may secure the gripper unit to the base unit in a state in which the receiving surface of the gripper unit and the distal end surface of the base unit are in contact with each other.

The gripper unit i) may include an engagement projection that engages with a locking groove formed in the base unit and ii) may be configured to be attached to the base unit by sliding in an extending direction of the locking groove.

The gripper unit may include an identification element for identifying a type of the gripper unit, and the base unit may include a sensor for detecting the identification element.

The tactile sensor may further include an automatic replacement device that includes a unit holding portion that holds a plurality of the gripper units, and a unit driving mechanism that attaches one of the plurality of gripper units held by the unit holding portion to the base unit.

The tactile sensor may further include a cover that is detachably attached to the gripper unit, wherein the cover includes an identification element for identifying a type of the cover.

The base unit may include a connection portion connected to a portion of a robot arm.

Another aspect of the present disclosure is a tactile sensor kit that includes a tactile sensor described above, and an other gripper unit that is different from the gripper unit and has a different shape depending on a type or shape of the object to be gripped.

Another aspect of the present disclosure is a tactile sensor system that includes a tactile sensor described above, and a control device that performs image processing based on an image captured by an imaging unit of the tactile sensor, wherein the control device includes an identification unit that identifies a type of the gripper unit attached to the base unit, and an image processing unit that i) references a storage that stores a plurality of types of the gripper units in association with a plurality of image processing methods corresponding to the types and ii) performs image processing using the image processing method according to an identified type of the gripper unit.

Another aspect of the present disclosure is a gripper unit detachable from a base unit with an imaging unit, including a gripping portion that is capable of contacting an object to be gripped and observing the object to be gripped from a surface opposite to a contact surface, and a reflective portion that is capable of reflecting an image of the object to be gripped observed from the opposite surface.

### EFFECT OF THE INVENTION

According to the present disclosure, it is possible to provide a tactile sensor, a tactile sensor kit, a tactile sensor system, and a gripper unit that can grip various objects and reduce manufacturing cost.

### BRIEF DESCRIPTION OF THE DRAWINGS

FIG. 1 shows a configuration of a tactile sensor system according to an embodiment of the present disclosure.
FIG. 2 is a perspective view of a robot hand.
FIG. 3 is a cross-sectional view schematically showing the configuration of a tactile sensor.
FIG. 4 shows an example of a captured image when an object touches a contact surface.
FIG. 5 is a side view of the tactile sensor.
FIG. 6 is an exploded perspective view of the tactile sensor.
FIG. 7 is a perspective view of the tactile sensor.
FIG. 8 is a cross-sectional view illustrating a configuration of a ball plunger.
FIG. 9 shows a tactile sensor system according to a second embodiment.
FIG. 10 shows a modification of the tactile sensor system.
FIG. 11 shows another modification of the tactile sensor system.
FIG. 12 is a perspective view of the modification of the tactile sensor.
FIG. 13 is an exploded perspective view of the tactile sensor of FIG. 12.
FIG. 14 is a perspective view of a base unit.
FIG. 15 is a cross-sectional view of the tactile sensor of FIG. 12.

### DESCRIPTION OF EMBODIMENTS

### <First Embodiment>

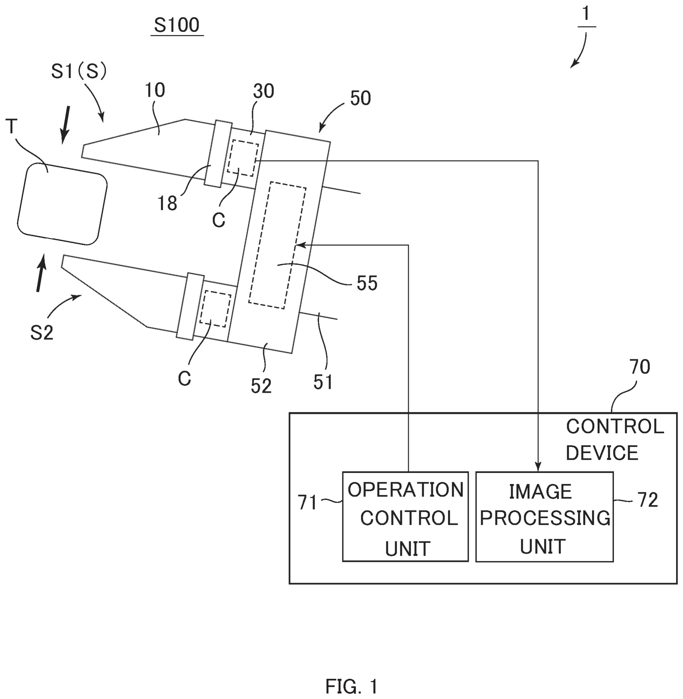

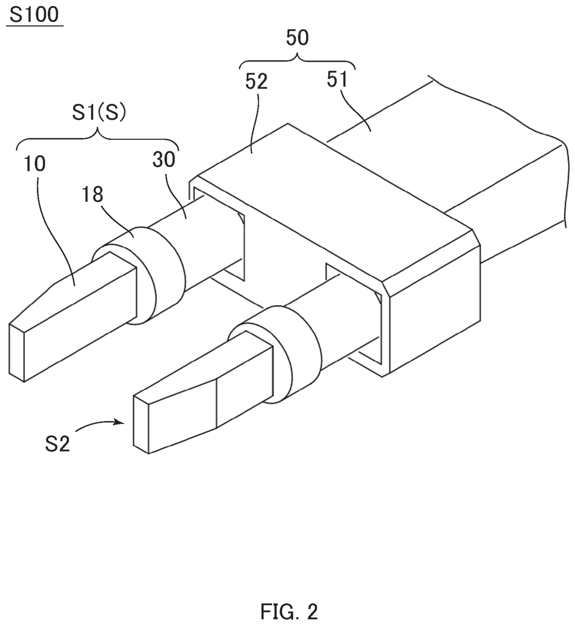

An embodiment of the present disclosure will be described below with reference to the drawings. FIG. 1 shows a configuration of a tactile sensor system according to an embodiment of the present disclosure. FIG. 2 is a perspective view of a robot hand.

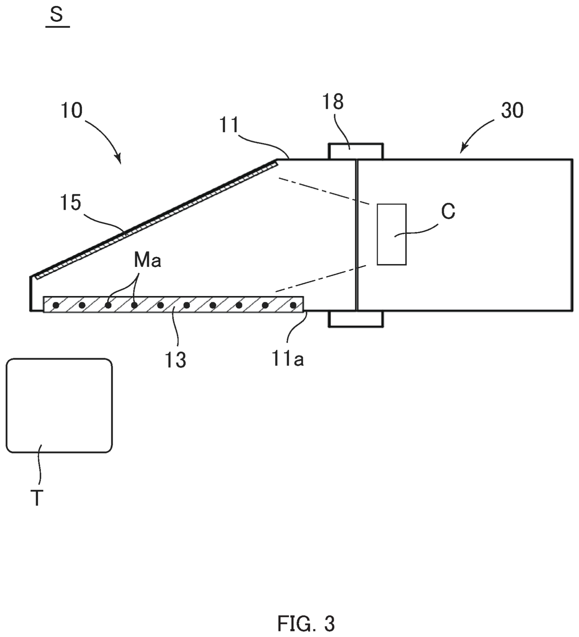

FIG. 3 is a cross-sectional view schematically showing the configuration of a tactile sensor.

As shown in FIG. 1, a tactile sensor system 1 includes a robot hand S100 and a control device 70. The tactile sensor system 1 detects a gripping state of an object T gripped by the robot hand S100, by performing image analysis on an image captured by an imaging unit C provided inside the robot hand S100.

The robot hand S100 includes a robot arm 50 and a tactile sensor S. In the present embodiment, a first tactile sensor S1 and a second tactile sensor S2 are provided as the tactile sensor S. The tactile sensor S functions as fingers of a robot, and grips and releases the object T.

The first tactile sensor S1 and the second tactile sensor S2 are provided so as to be movable toward and away from each other (see the arrows in FIG. 1), so that the object T, which is an object to be gripped, can be held between them. Since the first tactile sensor S1 and the second tactile sensor S2 have the same structure, description will be made with reference to the first tactile sensor S1. It should be noted that a plurality of tactile sensors S are provided in the present embodiment, but only a single tactile sensor S may be provided in the tactile sensor system 1. Further, only one of the two tactile sensors S may be configured to be movable.

As shown in FIG. 1, the robot arm 50 includes a movable arm 51 and a tactile sensor support 52. The movable arm 51 is an articulated arm, for example. The movable arm 51 is configured to be moved by an arm operation unit not shown in figures.

The tactile sensor support 52 is a component secured to the movable arm 51. The tactile sensor support 52 supports a pair of the tactile sensors S. The tactile sensor support 52 specifically includes a drive mechanism 55. The drive mechanism 55 includes i) a drive source such as a motor and ii) a transmission mechanism that moves the first tactile sensor S1 and the second tactile sensor S2 using a force from the drive source. The drive mechanism 55 operates the first tactile sensor S1 and the second tactile sensor S2 in accordance with a control signal from the control device 70 so that the first tactile sensor S1 and the second tactile sensor S2 approach or separate from each other, for example.

### (Basic configuration of tactile sensor S)

As shown in FIG. 1 to FIG. 3, the tactile sensor S includes a gripper unit 10 and a base unit 30. The tactile sensor S captures an image of the object T with the imaging unit C provided inside the tactile sensor S, and generates a captured image.

Although details will be described later, a member which is i) elastically deformable and ii) provided with a predetermined dot pattern is disposed in a portion of the gripper unit 10 of the tactile sensor S. When the object T is gripped, the gripping state of the object T is detected based on a change in the position of the image of the dot pattern. One of the features of the tactile sensor S of the present embodiment is that the gripper unit 10 is configured to be detachable from the base unit 30. Before describing this point, basic functions and configurations of the tactile sensor S and the tactile sensor system 1 will be described below.

The gripper unit 10 has a predetermined shape suitable for the type or shape of the object T to be gripped by the robot hand S100. As shown in FIG. 3, the gripper unit 10 includes a housing 11, a gripping portion 13, a reflective portion 15, and a connection portion 18. The gripper unit 10 is not limited to the shape as in the examples of FIG. 1 to FIG. 3, and may have a spoon shape, a tong shape, or a fork shape, for example. The tactile sensor S and one or more gripper units 10 having different shapes from each other may be prepared as a tactile sensor kit, and the gripper unit 10 suitable for the type or shape of the object T may be attached to the base unit 30 and used as a component of the robot hand S100.

The housing 11 has a hollow structure and, in this example, a cylindrical shape. Specifically, the housing 11 is formed in a cylindrical shape with its thickness decreasing toward the distal end. The housing 11 is provided with a gripping surface 11a that faces the object T when the robot hand S100 grips the object T.

In the tactile sensor S according to the present embodiment, since it is necessary to capture an image of the object T using the imaging unit C provided inside the tactile sensor S, at least the gripping surface 11a of the housing 11 is made of a transparent material that allows light to pass therethrough. The entire gripping surface 11a may be made of a transparent material, or only a portion of the gripping surface 11a may be made of a transparent material.

The gripping portion 13 is a member that is disposed to the gripping surface 11a and is capable of contacting the object T. The gripping portion 13 is made of a transparent material that allows light to pass therethrough, thereby enabling observation of the object T from a surface opposite to a surface in contact with the object T. The gripping portion 13 is made of a material having elasticity so that its portion in contact with the object T deforms when the robot hand S100 grips the object T. For example, the gripping portion 13 is in a form of a sheet having a thickness of approximately 1 mm to 5 mm, and is made of a light-transmissive silicone material. A surface of the gripping portion 13 may have irregularities in a predetermined pattern.

The gripping portion 13 is provided with a plurality of markers Ma. In this example, the plurality of markers Ma are dots arranged in a grid pattern on an extending surface of a sheet of the gripping portion 13.

The reflective portion 15 is a mirror that reflects an image of the object T. The reflective portion 15 enables the imaging unit C to capture an image of the object T reflected by the reflective portion 15. The reflective portion 15 is disposed so that its normal (not shown in figures) is inclined with respect to an imaging optical axis of the imaging unit C. The reflective portion 15 is not limited to a plane mirror, and may be a concave mirror or a convex mirror. The reflective portion 15 may be composed of a plurality of mirrors.

The connection portion 18 is provided at an end portion of the housing 11 and is a member to be connected to the base unit 30. Although the connection portion 18 is schematically shown in FIG. 3, a specific structure of the connection portion 18 will be described later with reference to other drawings.

The base unit 30 is a component to which the gripper unit 10 is connected detachably. The base unit 30 has a cylindrical shape, for example, and the imaging unit C is disposed therein. As an example, the base unit 30 is made of a light-shielding material so as to prevent external light from entering through a side surface of the cylinder. Specifically, the base unit 30 is made of metal.

The imaging unit C includes an imaging element and captures an image of the object T. The imaging unit C is configured to image at least one of a) at least a part of a surface of the gripping portion 13 opposite to a surface in contact with the object T or b) at least a part of the reflective portion 15. In the example shown in FIG. 3, the imaging unit C is configured to image both the gripping portion 13 and the reflective portion 15.

It should be noted that the base unit 30 may be provided with a light-emitting device such as an LED so that the imaging unit C can capture a clear image of the object T. The light-emitting device is arranged so as to radiate light toward the object T. The light-emitting device may be disposed in such an orientation that the light reflected by the reflective portion 15 irradiates the object T.

The control device 70 (see FIG. 1) controls the operation of the robot hand S100 and identifies the gripping state of the object T. As shown in FIG. 1, the control device 70 includes an operation control unit 71 and an image processing unit 72.

The operation control unit 71 controls the operation of the robot hand S100 by providing a control signal to the drive mechanism 55 of the robot hand S100. The image processing unit 72 detects the gripping state of the object T based on the captured image of the object T generated by the imaging unit C.

### (Process for detecting gripping state)

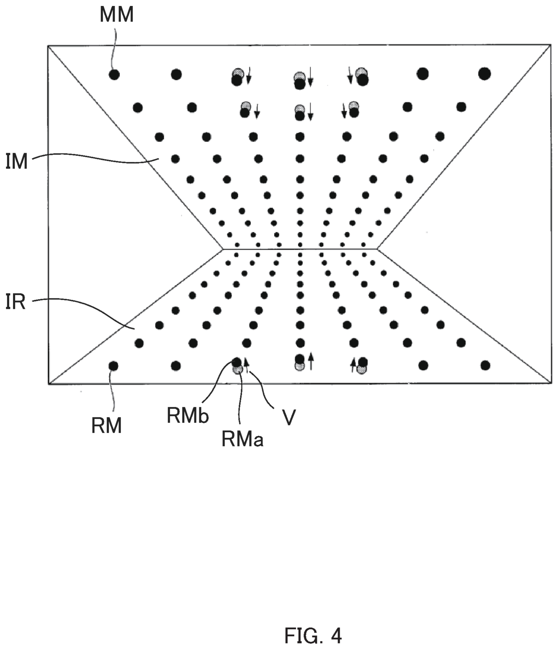

Since the principle by which the tactile sensor system 1 detects the gripping state of the object T using the captured image of the object T captured by the imaging unit C is described in WO2021/001992, a detailed description thereof will be omitted, and a brief description thereof will be given below. FIG. 4 shows an example of a captured image when an object touches a contact surface.

The captured image of FIG. 4 includes a direct-view image IR and a reflected image IM. The direct-view image IR is an image generated by directly capturing the object T through the gripping portion 13, which is transparent, with the imaging unit C. The direct-view image IR includes a marker image RM, which is an image of the plurality of markers Ma.

The reflected image IM is an image generated by indirectly capturing an image of the object T via the reflective portion 15 with the imaging unit C. The reflected image IM includes a marker image RM, which is an image of the plurality of markers Ma.

In the direct-view image IR of FIG. 4, a marker image before the robot hand S100 grips the object T and a marker image after gripping are shown as a marker image RMa and a marker image RMb, respectively. A position of the marker moves from the marker image RMa to the marker image RMb before and after gripping the object T. In this manner, in the robot hand S100 according to the present embodiment, the gripping portion 13 elastically deforms while gripping the object T, causing the position of the marker image captured by the imaging unit C to change.

The difference in position between the marker image RMa and the marker image RMb can be represented by a marker vector V. In this manner, the tactile sensor system 1 can identify the gripping state of the object T by obtaining a plurality of marker vectors V and referring to the gripping states associated with the marker vectors V.

As described above, in the tactile sensor system 1 according to the present embodiment, the gripping state of the object T is identified based on the captured image. Since the gripping state is identified based on the captured image in this manner, it is desirable that the tactile sensor S of the tactile sensor system 1 has a configuration capable of accurately capturing a change in the position of the marker image. In addition, since the robot hand S100 needs to grip various objects T according to the intended application, it is preferable that a plurality of gripper units 10 having different shapes corresponding to the type or shape of the object T can be used.

### (Structural features of tactile sensors S)

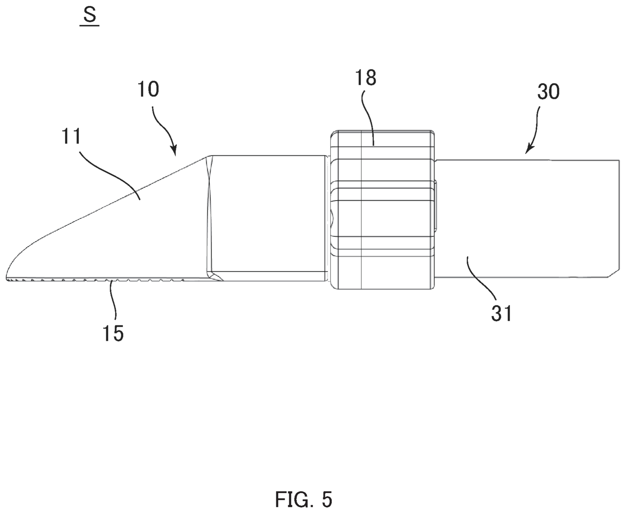

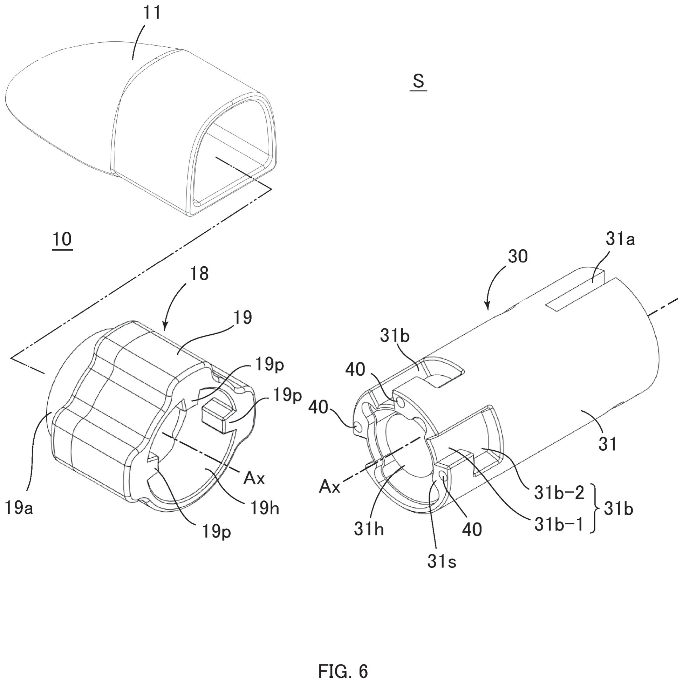

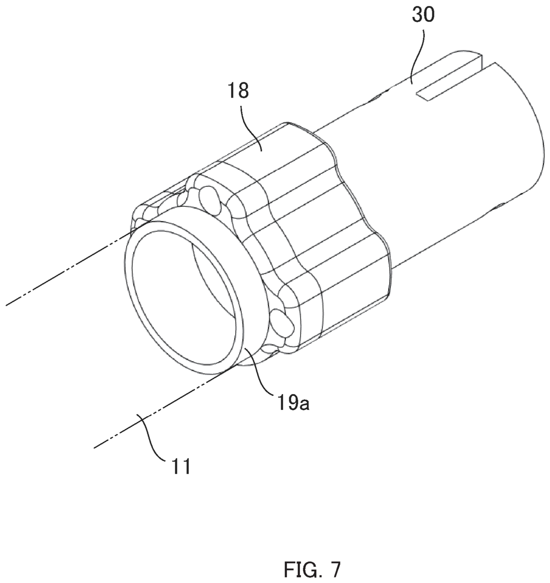

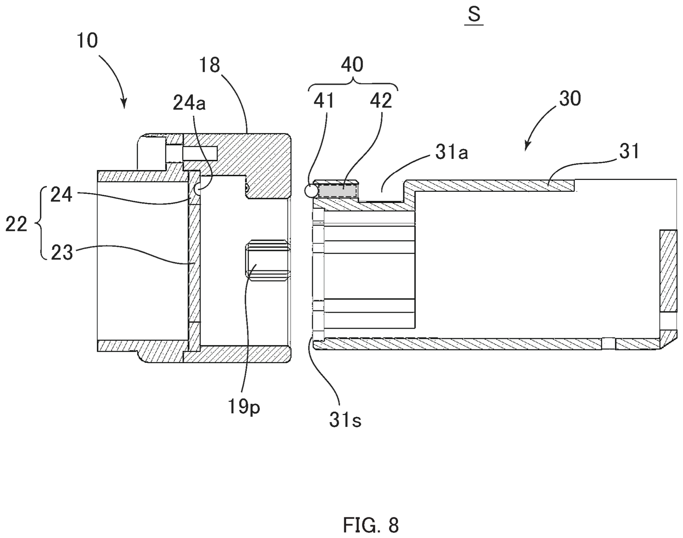

Next, a structure of the tactile sensor S will be described with reference to figures illustrating a specific configuration example of the tactile sensor S. FIG. 5 is a side view of the tactile sensor. FIG. 6 is an exploded perspective view of the tactile sensor. FIG. 7 is a perspective view of the tactile sensor. FIG. 8 is a cross-sectional view illustrating a configuration of a ball plunger.

### (Gripper unit 10)

As shown in FIG. 5, the gripper unit 10 of the tactile sensor S is connected to the base unit 30 via the connection portion 18 that is connected to a cylindrical body 31 of the base unit 30. In the gripper unit 10, the connection portion 18 is secured to an end portion of the housing 11, so that the entire unit forms a single component.

As shown in FIG. 6, the connection portion 18 has a body 19 provided in a cylindrical shape. The connection portion 18 is made of metal, as an example. The body 19 is provided with an opening 19h into which an end portion of the cylindrical body 31 of the base unit 30 is inserted.

The body 19 has a protruding portion 19p protruding radially inward in the vicinity of the opening 19h. In the present embodiment, three protruding portions 19p are provided. The protruding portion 19p is a structural portion configured to be fitted into a locking groove 31b of the cylindrical body 31 of the base unit 30 described later.

The body 19 has a cylindrical portion 19a at an end portion opposite to the opening 19h. The cylindrical portion 19a is a portion to which the housing 11 is connected. FIG. 6 shows a state in which the housing 11 is separated from the body 19, but the housing 11 need not be detachable from the body 19.

### (Base unit 30)

As shown in FIG. 6, the base unit 30 includes the cylindrical body 31. The cylindrical body 31 may be made of any material, but is made of metal as described above in the present embodiment. The cylindrical body 31 is a cylinder, for example, and an opening 31h is provided at its end portion. A distal end surface 31s is formed at the end portion of the cylindrical body 31. The distal end surface 31s is a plane orthogonal to a central axis Ax of the base unit 30.

A connection portion 31a to which a portion of the robot arm is connected is provided at an end portion of the cylindrical body 31 opposite to a side on which the distal end surface 31s is formed. In this example, the connection portion 31a is a slit-shaped groove.

### (Structure for securing gripper unit 10 and base unit 30)

As described above, the robot hand S100 is configured to allow attachment of various tactile sensors S having different shapes, depending on the type or shape of the object T to be gripped by the robot hand S100. However, in the tactile sensor system 1 according to the present embodiment, the imaging unit C is provided in the tactile sensor S as described above.

As a method of detachably providing the tactile sensors S, for example, a plurality of tactile sensors S in which the gripper unit 10 and the base unit 30 are integrally provided may be prepared, and one of them is attached to the robot arm 50.

However, in this method, it is necessary to provide the imaging unit C in each of the tactile sensors S, and therefore the manufacturing cost of the tactile sensors S, which serve as replacement parts, increases. Furthermore, since each tactile sensor S is provided with its own imaging unit C, variations in the performance of the imaging units C may affect the accuracy of image analysis.

Accordingly, the present embodiment adopts a configuration in which the base unit 30 provided with the imaging unit C is used as a common component, and a plurality of gripper units 10 are detachably secured to the base unit 30. The structure for detachably securing the gripper unit 10 to the base unit 30 includes the connection portion 18 of the gripper unit 10, a locking groove 31b formed in the cylindrical body 31 of the base unit 30, and a ball plunger 40.

As shown in FIG. 6, the locking groove 31b is formed at the end portion of the cylindrical body 31. The locking groove 31b is an L-shaped groove formed on an outer peripheral surface of the cylindrical body 31. In this example, the locking groove 31b is a groove recessed radially inward from the outer peripheral surface of the cylindrical body 31. Specifically, the locking groove 31b includes a portion 31b-1 that extends in the axial (longitudinal) direction of the cylindrical body 31 from the distal end surface 31s, and a portion 31b-2 that extends in the circumferential direction of the cylindrical body 31. As one example, the portion 31b-2 is orthogonal to the portion 31b-1. In the present embodiment, three locking grooves 31b are provided along the circumferential direction of the cylindrical body 31.

### (Ball plunger 40)

The ball plunger 40 positions the gripper unit 10 in the circumferential direction relative to the base unit 30. In the present embodiment, three ball plungers 40 are provided along the circumferential direction of the cylindrical body 31.

The ball plunger 40 also provides a clicking sensation when the gripper unit 10 is attached to the base unit 30. It should be noted that it is not an essential element in the present disclosure that the ball plunger 40 provides the clicking sensation.

As shown in FIG. 8, the ball plunger 40 has a ball 41 and a spring 42. Although not shown in FIG. 8, the ball plunger 40 may have a cylindrical housing that houses the ball 41 and the spring 42.

The ball plunger 40 is provided so that a portion of the ball 41 protrudes from the distal end surface 31s. Specifically, the ball plunger 40 is disposed at the distal end portion of the cylindrical body 31 so as to extend in the axial direction of the cylindrical body 31. When the ball plunger 40 is arranged in this orientation, the base unit 30 can be downsized as compared with a configuration in which the ball plunger 40 is arranged, for example, radially in the diametrical direction of the cylindrical body 31.

The connection portion 18 includes an intermediate plate 22 therein. The intermediate plate 22 includes a light-transmitting portion 23 and a peripheral portion 24. The light-transmitting portion 23 is made of a material having optical transparency, thereby allowing the imaging unit C (not shown in FIG. 8) to capture an image of the object T. It should be noted that the light-transmitting portion 23 may have a flat plate shape, or alternatively, may have a shape of a convex lens or a concave lens. The intermediate plate 22 may also function as a protective plate that partitions the internal space of the connection portion 18 to prevent, for example, liquid or foreign matter from entering the base unit 30.

The peripheral portion 24 includes a flat receiving surface, and a recess 24a into which the ball 41 of the ball plunger 40 is fitted is formed in this peripheral portion 24. The recess 24a is a hemispherical or substantially hemispherical recess corresponding to the shape of the ball 41, for example. Although only a single recess 24a is shown in FIG. 8, a plurality of recesses 24a are formed in the peripheral portion 24 at positions corresponding to the respective ball plungers 40.

### (Attachment and detachment of gripper unit 10)

The gripper unit 10 configured as described above is detachably attached to the base unit 30. Specifically, first, the gripper unit 10 is pushed toward the base unit 30 in a state where the protruding portion 19p (FIG. 6) of the connection portion 18 is aligned in a direction to enter the locking groove 31b of the base unit 30.

When the connection portion 18 is pushed toward the base unit 30 to a predetermined position, the distal end surface 31s of the cylindrical body 31 (FIG. 8) and the receiving surface of the peripheral portion 24 inside the connection portion 18 come into contact. In this state, by rotating the gripper unit 10 in the circumferential direction of the cylindrical body 31, the protruding portion 19p (FIG. 6) engages with the portion 31b-2 of the locking groove 31b, thereby preventing the connection portion 18 from being removed from the cylindrical body 31.

When the connection portion 18 is rotated to a predetermined securing position, the ball 41 of the ball plunger 40 is fitted into the recess 24a of the receiving surface 20 by an urging force of the spring 42. At this time, the user attaching the ball plunger 40 can feel the clicking sensation. By the above series of steps, the operation of attaching the gripper unit 10 to the base unit 30 is completed. When detaching the gripper unit 10, the above steps are performed in reverse.

### (Effects of tactile sensor S)

According to the tactile sensor S configured as described above, since the gripper unit 10 is detachable from the base unit 30, a gripper unit 10 corresponding to the type or shape of the object T to be gripped by the robot hand S100 can be attached to the robot hand S100 for use.

In particular, in the configuration of the present embodiment, since the imaging unit C is provided in the base unit 30 and it is not necessary to provide the imaging unit C in the gripper unit 10 to be replaced, the manufacturing cost of the replacement component can be reduced. Further, since a shared imaging unit C is provided in the base unit 30 rather than an imaging unit C being provided for each gripper unit 10, it is also possible to prevent a decrease in the accuracy of image analysis due to variations in the performance of the imaging units C.

Furthermore, according to the configuration of the present embodiment in which the distal end surface 31s of the cylindrical body 31 and the receiving surface of the gripper unit 10 come into contact with each other in a state where the gripper unit 10 is attached to the base unit 30, the axial position of the gripper unit 10 relative to the base unit 30 is defined with the surfaces being in contact with each other, thereby enabling the gripper unit 10 to be positioned with high accuracy. In this manner, the gripper unit 10 being secured to the base unit 30 with high positional accuracy means that the optical system of the tactile sensor S is configured with high accuracy, and as a result, the accuracy of image analysis is improved.

Further, in a configuration such as that of the present embodiment in which the gripper unit 10 is secured to the base unit 30 by being rotated in the circumferential direction of the cylindrical body 31, the user can attach the gripper unit 10 through a simple operation.

Moreover, in a configuration such as that of the present embodiment in which the ball plunger 40 is provided, the gripper unit 10 can be positioned at the predetermined securing position in the circumferential direction relative to the base unit 30. Such a configuration is particularly useful in the robot hand S100 in which the gripper unit 10 needs to be attached to the base unit 30 in a predetermined orientation in order to properly grip the object T.

In the above-described embodiment, an example is shown in which the gripper unit 10 is secured to the base unit 30 by rotating the gripper unit 10, but the present disclosure is not limited to such a configuration. The gripper unit 10 may include a locking means that detachably secures the gripper unit 10 to the base unit 30 by a method other than rotation. The locking means may be constituted by a member separate from the gripper unit 10 and the base unit 30. For example, the locking means may be one that mechanically connects the gripper unit 10 and the base unit 30 (such as bolts, nuts, pins, or clamp mechanisms).

Even in cases where the gripper unit 10 is secured to the base unit 30 by such a locking means, it is preferable in one embodiment that the gripper unit 10 is secured to the base unit 30 in a state where the receiving surface (e.g., the peripheral portion 24) of the gripper unit 10 and the distal end surface 31s of the base unit 30 are in contact with each other. In this case as well, since the axial position of the gripper unit 10 relative to the base unit 30 is defined with the surfaces being in contact with each other, the gripper unit 10 can be positioned with high accuracy.

### <Second Embodiment>

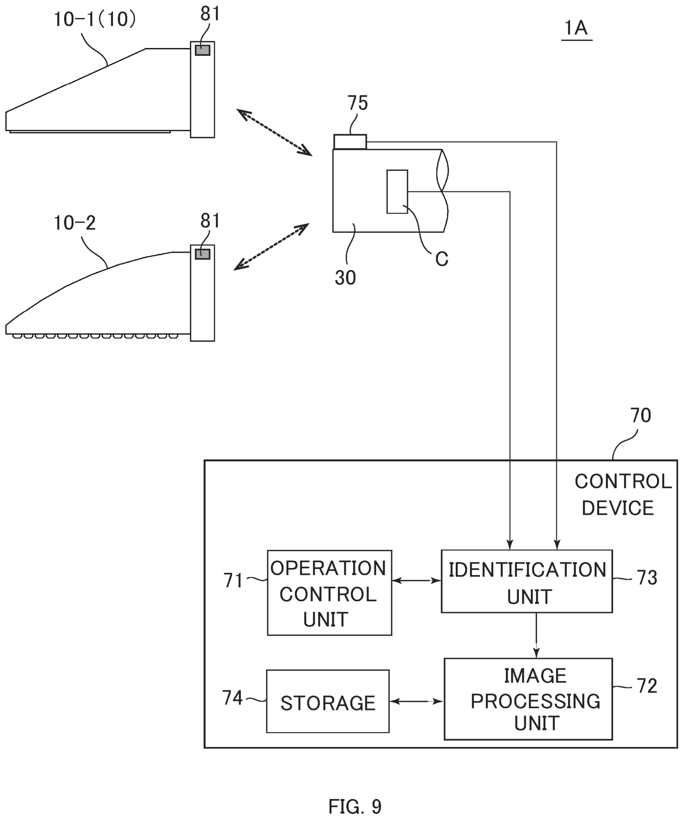

FIG. 9 shows a tactile sensor system according to a second embodiment. A tactile sensor system 1A includes a plurality of gripper units 10, a sensor 75, and a control device 70. Since the basic configuration of the tactile sensor system 1A is the same as that of the tactile sensor system 1 according to the first embodiment, redundant description will be omitted.

As the plurality of gripper units 10, the tactile sensor system 1A includes a first gripper unit 10-1 and a second gripper unit 10-2. The first gripper unit 10-1 and the second gripper unit 10-2 have shapes different from each other. Both the first gripper unit 10-1 and the second gripper unit 10-2 are detachably attached to the base unit 30.

In this manner, when the plurality of gripper units 10 are used in the tactile sensor system 1A, it is preferable that each gripper unit 10 can be identified. Accordingly, in the present embodiment, each gripper unit 10 is provided with an identification element 81 for identifying the type of the gripper unit 10. The identification element 81 may be a barcode, a QR code (registered trademark), or a binary pattern, for example. The identification element 81 may also be an element such as an RFID tag or a magnet, for example.

The sensor 75 is provided in the base unit 30 and detects the identification element 81. The sensor 75 may be of any type as long as it can detect the identification element 81. The sensor 75 may be an imaging device that reads barcodes, QR codes, or binary patterns, for example. The sensor 75 may also be a reader for reading RFID tags. The sensor 75 may also be a Hall sensor that detects magnetic properties of magnets.

If the identification element 81 is detectable by the imaging device, the imaging unit C provided in the base unit 30 may detect the identification element 81. In such a configuration, the identification element 81 is provided within a range that can be captured by the imaging unit C of the gripper unit 10. By allowing the imaging unit C, which captures the object, to also function as the imaging device for identifying the identification element 81, it is unnecessary to provide the sensor 75, thereby simplifying the configuration.

The control device 70 includes an operation control unit 71, an image processing unit 72, an identification unit 73, and a storage 74. Since basic functions of the operation control unit 71 and the image processing unit 72 are the same as those of the first embodiment, only functions different from those of the first embodiment will be described.

The identification unit 73 identifies the type of the gripper unit 10 attached to the base unit 30 based on the information of the identification element 81 read by the sensor 75. The identification unit 73 identifies the gripper unit 10 attached to the base unit 30 by, for example, referring to the storage 74 that stores a) information of a plurality of identification elements 81 and b) the types of a plurality of gripper units 10 in association with each other, based on information of the identification element 81 (identification information) read by the sensor 75.

When the gripper units 10 having different shapes from each other are attached to the base unit 30 as in the present embodiment, it is preferable that the tactile sensor system 1A performs an operation corresponding to the type of the attached gripper unit 10. With such a configuration, it becomes possible to securely grip the object in accordance with the object to be gripped and the characteristics of the attached gripper unit 10.

To achieve this, the operation control unit 71 may i) refer to the storage 74 that stores a) a plurality of pieces of information of the identification elements 81 and b) operation patterns of the robot hand S100 in association with each other, based on the information of the identification element 81 read by the sensor 75 or the imaging unit C, ii) identify the operation pattern corresponding to the attached gripper unit 10, and iii) operate the drive mechanism 55 (see FIG. 1) in accordance with the identified operation pattern.

The image processing unit 72 performs image processing using an image processing method corresponding to the attached gripper unit 10, for example. In the example of FIG. 9, since shapes of the first gripper unit 10-1 and the second gripper unit 10-2 differ, the optical characteristics of internal reflective portions 15 and gripping portions 13 are not identical, and image processing corresponding to each gripper unit is required.

Accordingly, the image processing unit 72 performs an image processing method corresponding to the type of the gripper unit 10 identified by the identification unit 73, by referring to the storage 74 that stores a plurality of types of gripper units 10 in association with corresponding image processing methods. Alternatively, the image processing unit 72 may perform an image processing method corresponding to the identification information identified by the identification unit 73 by referring to the storage 74 that stores a plurality of pieces of information of the identification elements 81 in association with a plurality of image processing methods.

For example, the image processing unit 72 performs image processing based on parameters of the gripper unit 10 such as the optical characteristics of the gripping portion 13 and the reflective portion 15, and material characteristics of the gripping portion 13 (e.g., deformation characteristics or slip characteristics when gripping an object). Specifically, the image processing unit 72 refers to parameters associated with each gripper unit 10 (or identification information of the identification element) and performs image processing in accordance with these parameters, in order to apply a weight or a threshold for the amount of slip used to operate the gripper unit 10, or to optimize the movement of the corresponding gripper unit 10. It should be noted that these parameters are not necessarily stored in the storage 74, and may be stored in a server provided in communication with the control device 70.

According to such a configuration, the tactile sensor system 1A can perform an appropriate image processing method in accordance with the types of the plurality of attached gripper units 10, without requiring the user of the tactile sensor system 1A to manually change any settings.

### <Modification 1>

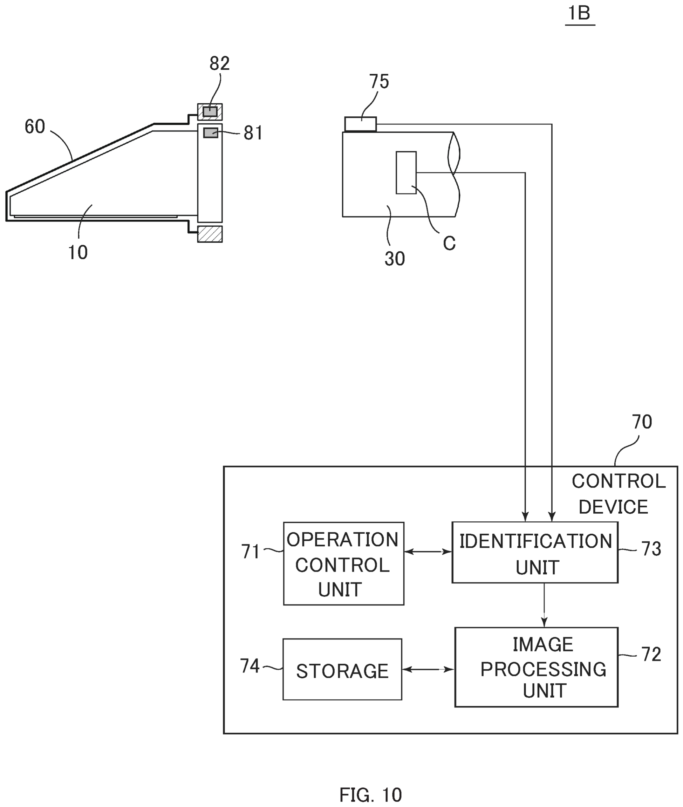

FIG. 10 shows a modification of the tactile sensor system. In a tactile sensor system 1B, the tactile sensor further includes a cover 60 in addition to the gripper unit 10.

The cover 60 is attached to the gripper unit 10. The cover 60 is detachably attached to the gripper unit 10, for example. The cover 60 may have a shape that entirely covers the gripper unit 10, or may have a shape that partially covers the gripper unit 10. The material of the cover 60 is not particularly limited, and may be a flexible material or a rigid material without flexibility.

Although it depends on the intended use of the gripper unit 10 and the cover 60, when the gripper unit 10 and the cover 60 are used in combination as shown in FIG. 10, it is preferable that whether the gripper unit 10 and the cover 60 are appropriately matched can be determined.

Accordingly, in this example, the cover 60 is provided with an identification element 82 for identifying the type of the cover 60. Like the identification element 81, the identification element 82 may employ various types of identification methods.

The identification unit 73 identifies the type of the cover 60 based on the information (identification information) of the identification element 82 read by the sensor 75 or the imaging unit C. The identification unit 73 refers to the storage 74 that stores the information of the plurality of identification elements 81 in association with the information of the plurality of identification elements 82, and determines whether the gripper unit 10 and the cover 60 are appropriately matched. Similar to the above-described process in which the identification element 81 of the gripper unit 10 is identified and an operation is performed based on an operation pattern and/or image processing parameters associated with the information of the identification element 81, in the case of FIG. 10, the identification element 82 of the cover 60 may also be identified, and an operation may be performed based on an operation pattern and/or image processing parameters associated with the information of the identification element 82.

It should be noted that although the identification element 82 is provided in the cover 60 in the example of FIG. 10, the cover 60 without the identification element 82 may be attached to the gripper unit 10.

### <Modification 2>

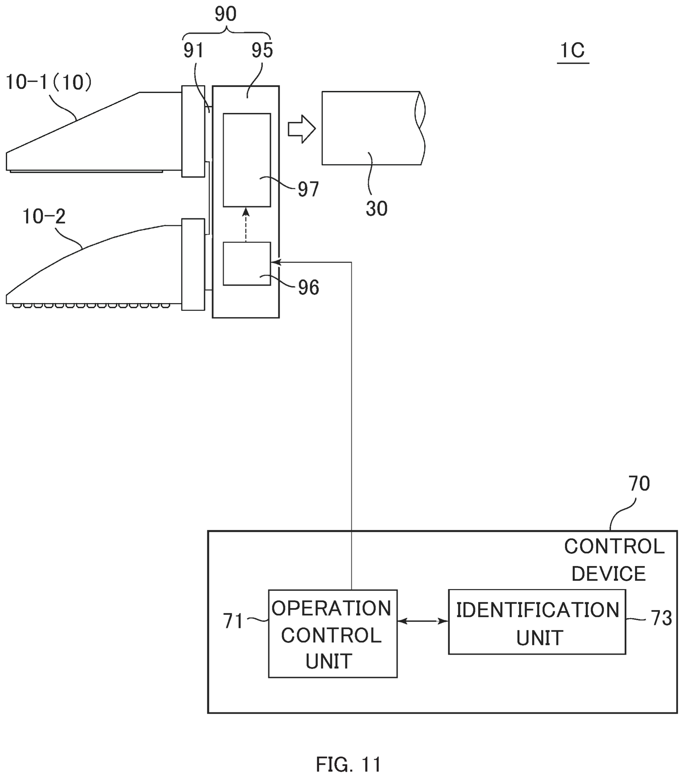

FIG. 11 shows another modification of the tactile sensor system. A tactile sensor system 1C includes an automatic replacement device 90. The automatic replacement device 90 includes a unit holding portion 91 and a unit driving mechanism 95. The unit holding portion 91 detachably holds a plurality of gripper units 10. The unit holding portion 91 includes a plurality of attachment portions to which the gripper unit 10 is attached.

The unit driving mechanism 95 operates based on a control signal transmitted from an operation control unit 71 of a control device 70. The unit driving mechanism 95 attaches one of the plurality of gripper units 10 held by the unit holding portion 91 onto the base unit 30. Specifically, the unit driving mechanism 95 includes a drive source 96 and an actuator 97.

The drive source 96 is a motor, for example. The actuator 97 is a mechanism that, by using a driving force from the drive source 96, selects one gripper unit 10 from the plurality of gripper units 10 held by the holding portion and attaches the selected gripper unit 10 to the base unit 30. For example, the actuator 97 may rotate the unit holding portion 91 about a predetermined axis to select a target gripper unit 10 and attach that gripper unit 10 to the base unit 30.

Accordingly, in the tactile sensor system 1C provided with the automatic replacement device 90, it is not necessary for a user to attach a predetermined gripper unit 10 to the base unit 30. It should be noted that, in FIG. 11, although the unit holding portion 91 is illustrated as a single component, the unit holding portion 91 may be composed of a plurality of components each holding the gripper unit 10, and these may function collectively as one unit holding portion.

### <Other modifications>

In the above description, an example is given in which the imaging unit C identifies the gripper unit 10 or cover 60 attached to the base unit 30 by capturing the identification element 81 or identification element 82. However, the tactile sensor system may identify the attached gripper unit 10 or cover 60 based on feature quantities of the object extracted from images of the gripper unit 10 and cover 60 captured by the imaging unit C.

### <Example of configuration in which gripper unit is connected to base unit through sliding mechanism>

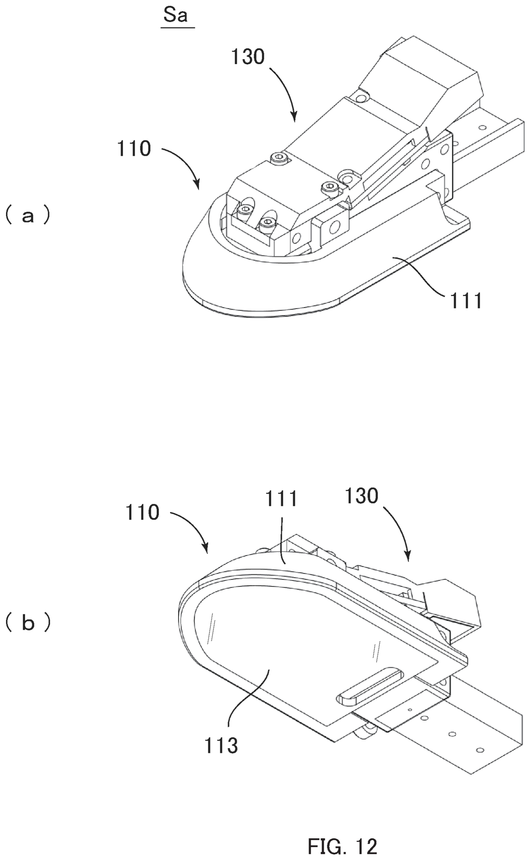

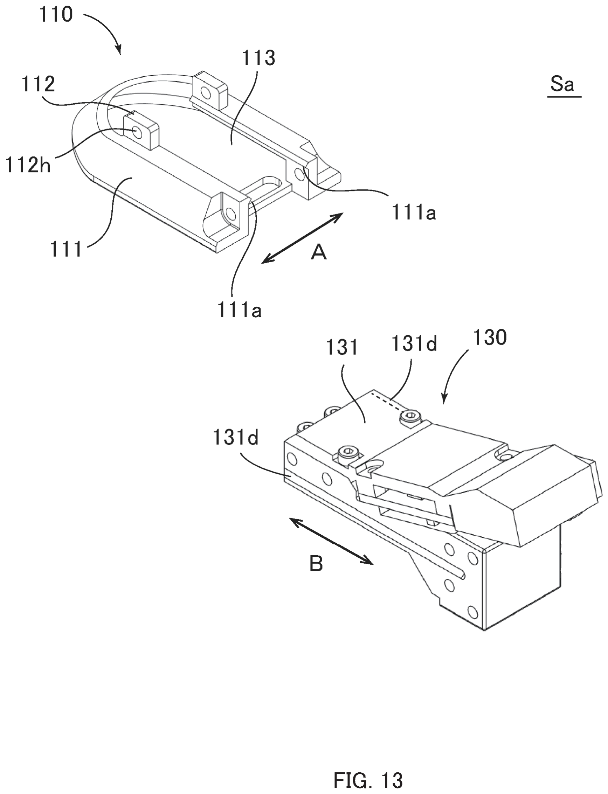

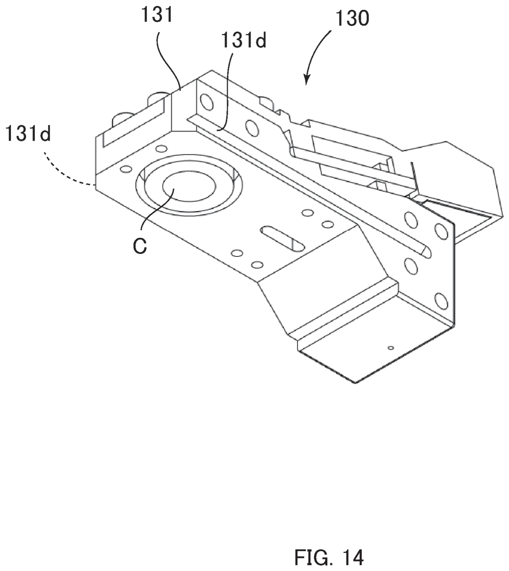

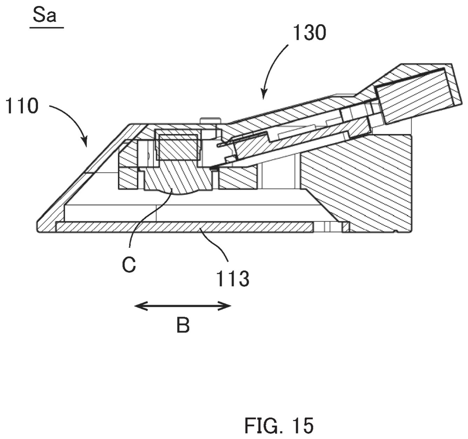

FIG. 12 is a perspective view of a modification of the tactile sensor. FIG. 13 is an exploded perspective view of the tactile sensor of FIG. 12. FIG. 14 is a perspective view of the base unit. FIG. 15 is a cross-sectional view of the tactile sensor of FIG. 12. In the following description, components that are the same as or corresponding to those of the above-described embodiments are denoted by the same reference numerals as those of the above-described embodiments.

As shown in FIG. 12, a tactile sensor Sa includes a gripper unit 110 and a base unit 130. The gripper unit 110 is configured to be detachable from the base unit 130.

As shown in FIG. 13, the gripper unit 110 includes a housing member 111 and a gripping portion 113. The housing member 111 is a member that supports the gripping portion 113. The housing member 111 is made of resin, for example, and is formed of a material that does not transmit light.

The housing member 111 includes a pair of engagement projections 111a. The engagement projections 111a are formed so as to face each other in the width direction of the gripper unit 110 (see an arrow A). The housing member 111 is provided with a plate-shaped portion 112 in which a through-hole 112h through which a securing screw (not shown in figures) passes is formed. As an example, the through-hole 112h extends in a direction orthogonal to the direction of an arrow B described later.

The gripping portion 113 is a member corresponding to the gripping portion 13 of the above-described embodiment. The gripping portion 113 is formed of a transparent material that transmits light. Thus, an object can be observed from a surface opposite to a surface in contact with the object, and the imaging unit C can capture the object. In this example, the gripping portion 113 is a plate-shaped member.

The base unit 130 includes a base unit body 131 and the imaging unit C. The base unit body 131 is a member corresponding to the cylindrical body 31 of the above-described embodiment. The base unit body 131 is made of metal as an example, and is connected to a robot arm or the like. The base unit body 131 is formed with a pair of locking grooves 131d. The locking grooves 131d are formed on side portions of the base unit body 131 and extend along an extending direction (see an arrow B) of the base unit body 131. In this example, an extending direction of the locking groove 131d is parallel to an extending direction of the gripping portion 113 which is a plate-like member.

As shown in FIG. 14, the imaging unit C is provided in a portion of the base unit body 131. In the tactile sensor Sa, as shown in FIG. 15, in a state where the gripper unit 110 is attached to the base unit 130, the imaging unit C is disposed at a position facing the gripping portion 113. The imaging unit C captures an image of the object in contact with the gripping portion 113 through the gripping portion 113.

In the tactile sensor Sa configured as described above, the gripper unit 110 is attached to the base unit 130 by sliding the gripper unit 110 in a state where the pair of engagement projections 111a of the gripper unit 110 are engaged with the pair of locking grooves 131d of the base unit 130. Then, with the gripper unit 110 moved to a predetermined securing position, the gripper unit 110 is secured to the base unit 130 using a fastening screw inserted through the through-hole 112h.

The plurality of gripper units 110 having different shapes and/or functions can be attached to the base unit 130. For example, a first gripper unit in which a surface of the gripping portion 113 that comes into contact with the object is flat, and a second gripper unit in which a surface of the gripping portion 113 that comes into contact with the object has irregularities formed thereon, may detachably attached to the base unit 130. Naturally, three or more types of gripper units 110 may be prepared, and one of them may be attached to the base unit 130.

In the above configuration, since the gripper unit 110 includes the engagement projection 111a that engages with the locking groove 131d formed in the base unit 130, and since the gripper unit 110 can be attached to the base unit 130 by sliding the engagement projection 111a in the extending direction of the locking groove 131d, the operation is easy.

The locking groove 131d extends in the direction indicated by the arrow B in FIG. 13, which is parallel to the extending direction of the gripping portion 113. According to such a configuration, even when the gripper unit 110 is slid in the direction of the arrow B, the distance between the gripping portion 113 and the imaging unit C remains constant. With such a configuration, optical characteristics between the gripping portion 113 and the imaging unit C are less likely to change, providing the advantage of enabling stable image processing.

The present disclosure is explained on the basis of the exemplary embodiments. The technical scope of the present disclosure is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments of the present disclosure. Further, effects of the new exemplary embodiments brought by the combinations also have the effects of the original exemplary embodiments.

### [Description of Symbols]

1: tactile sensor system
10: gripper unit
11a: gripping surface
13: gripping portion
15: reflective portion
18: connection portion
19: body
19a: cylindrical portion
19p: protruding portion
22: intermediate plate
23: light-transmitting portion
24: peripheral portion
24a: recess
30: base unit
31: cylindrical body
31a: connection portion
31b: locking groove
31s: distal end surface
40: ball plunger
41: ball
42: spring
50: robot arm
51: movable arm
52: tactile sensor support
55: drive mechanism
60: cover
70: control device
71: operation control unit
72: image processing unit
73: identification unit
74: storage
75: sensor
81: identification element
82: identification element
90: automatic replacement device
91: unit holding portion
95: unit driving mechanism
96: drive source
97: actuator
111: housing member
111a: engagement projection
112: plate-shaped portion
113: gripping portion
130: base unit
131: base unit body
131d: locking groove
Ax: central axis
C: imaging unit
S, Sa: tactile sensor
S1: first tactile sensor
S2: second tactile sensor
S100: robot hand
T: object

## Claims

1. A tactile sensor comprising:
a gripper unit that includes i) a gripping portion capable of contacting an object to be gripped and capable of observing the object to be gripped from a surface opposite to a contact surface, and ii) a reflective portion capable of reflecting an image of the object to be gripped observed from the opposite surface; and
a base unit that includes an imaging unit capable of imaging at least one of i) at least a portion of the opposite surface or ii) at least a portion of the reflective portion, wherein
the gripper unit is configured to be detachable from the base unit.

2. The tactile sensor according to claim 1, wherein the base unit is a cylindrical body in which the imaging unit is provided, and
the gripper unit includes a receiving surface that contacts a distal end surface of the cylindrical body when the gripper unit is attached to the base unit.

3. The tactile sensor according to claim 1 or 2, wherein
the gripper unit is configured to be secured to the base unit by rotating in a circumferential direction of the gripper unit.

4. The tactile sensor according to claim 3, further comprising:
a ball plunger that positions the gripper unit in the circumferential direction relative to the base unit when the gripper unit rotates to a predetermined position relative to the base unit.

5. The tactile sensor according to claim 4, wherein
the ball plunger is provided at a distal end portion of the cylindrical body in a direction extending along an axial direction of the cylindrical body of the gripper unit.

6. The tactile sensor according to claim 2, further comprising:
a locking means that detachably secures the gripper unit to the base unit, wherein
the locking means secures the gripper unit to the base unit in a state in which the receiving surface of the gripper unit and the distal end surface of the base unit are in contact with each other.

7. The tactile sensor according to claim 1, wherein
the gripper unit i) includes an engagement projection that engages with a locking groove formed in the base unit and ii) is configured to be attached to the base unit by sliding in an extending direction of the locking groove.

8. The tactile sensor according to claim 1 or 2, wherein
the gripper unit includes an identification element for identifying a type of the gripper unit, and
the base unit includes a sensor for detecting the identification element.

9. The tactile sensor according to claim 1 or 2, further comprising:
an automatic replacement device that includes:
a unit holding portion that holds a plurality of the gripper units, and
a unit driving mechanism that attaches one of the plurality of gripper units held by the unit holding portion to the base unit.

10. The tactile sensor according to claim 1 or 2, further comprising:
a cover that is detachably attached to the gripper unit, wherein
the cover includes an identification element for identifying a type of the cover.

11. The tactile sensor according to claim 1 or 2, wherein
the base unit includes a connection portion connected to a portion of a robot arm.

12. A tactile sensor kit comprising:
a tactile sensor according to claim 1 or 2; and
an other gripper unit that is different from the gripper unit and has a different shape depending on a type or shape of the object to be gripped.

13. A tactile sensor system comprising:
a tactile sensor according to claim 1 or 2; and
a control device that performs image processing based on an image captured by an imaging unit of the tactile sensor, wherein
the control device includes:
an identification unit that identifies a type of the gripper unit attached to the base unit, and
an image processing unit that i) references a storage that stores a plurality of types of the gripper units in association with a plurality of image processing methods corresponding to the types and ii) performs image processing using the image processing method according to an identified type of the gripper unit.

14. A gripper unit detachable from a base unit with an imaging unit, comprising:
a gripping portion that is capable of contacting an object to be gripped and observing the object to be gripped from a surface opposite to a contact surface; and
a reflective portion that is capable of reflecting an image of the object to be gripped observed from the opposite surface.
